# EUROPEAN PATENT APPLICATION

(11) **EP 4 768 348 A1**
(43) Date of publication of application: **01.07.2026**
(21) Application number: 24856464.3
(22) Date of filing: 21.08.2024
(51) Int. Cl.: B60R 21/262, B60N 2/42, B60R 21/207, B60R 21/213, B60R 21/232

(54) **METHOD FOR MANUFACTURING VEHICLE AIRBAG DEVICE AND VEHICLE AIRBAG DEVICE**

(30) Priority: 23.08.2023 JP 2023135557
(71) Applicant: AUTOLIV DEVELOPMENT AB, 44783 Vargarda (JP)
(72) Inventor: SHIMIZU, Takayuki, Yokohama-shi, Kanagawa 222-8580 (JP); NAKASHIMA, Atsushi, Yokohama-shi, Kanagawa 222-8580 (JP)
(74) Representative: Müller Verweyen
(86) International application number: PCT/JP2024/029551
(87) International publication number: WO 2025/041776

(57) **Abstract**

A method of manufacturing the airbag device 300, including:
a step of joining an edge 316 of the second inner panel 306b to the first inner panel 306a in a state in which an edge 314 of the first inner panel 306a overlaps the second inner panel 306b;
a step of joining an edge 320 of a second outer panel 308b to a first outer panel 308a in a state in which an edge 318 of the first outer panel 308a overlaps the second outer panel 308b; and
a step of joining the inner panel 306 and the outer panel 308 in a tubular shape in a state in which the edge 314 of the first inner panel 306a and the edge 318 of the first outer panel 308a face each other.

## Description

### TECHNICAL FIELD

The present invention relates to a method of manufacturing a vehicle airbag device that protects an occupant in the event of a vehicle emergency, and to an airbag device for a vehicle.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure. For example, the airbag cushion of a side airbag device expands and deploys from the side of the seat on which the occupant is seated in the direction in which the occupant is facing, thereby protecting the occupant from the side. In addition, the airbag cushion of the curtain airbag device expands and deploys from an upper part of the side wall of the vehicle compartment so as to cover the side window, preventing occupants from being thrown out of the vehicle.

An airbag cushion may be provided with a check valve to maintain the internal pressure when expanded and deployed. For example, as described in paragraph 0034 and FIG. 2, an airbag 10 of Patent Document 1 is provided with a check valve 50 in a passage part 23 to prevent backflow of gas from a second air chamber 22 at the rear of the vehicle.

### RELATED ART DOCUMENTS

### PATENT DOCUMENTS

Patent Document 1: Japanese Unexamined Patent Application 2014-37176

### SUMMARY OF THE INVENTION

In the technique of Patent Document 1, as depicted in FIG. 4 and the like, the check valve 50 is formed by joining base fabrics 13 and 14 of the airbag 10 to a portion extending from a diffuser 30. However, with this configuration, the check valve 50 can only be provided near the diffuser 30. In addition, if the amount of base fabric used increases due to, for example, extending the diffuser 30, there is a risk that folding the airbag 10 for stowing will become difficult. In current airbag cushions, a check valve that has a simple configuration and is capable of fully exhibiting the function thereof is desired.

### PROBLEM TO BE SOLVED BY THE INVENTION

In light of the problems described above, an object of the present invention is to provide a method of manufacturing a vehicle airbag device that uses a check valve with a simple configuration and has improved occupant restraint performance, and a vehicle airbag device.

### MEANS FOR SOLVING THE PROBLEM

To resolve the problems described above, a typical configuration for a method of manufacturing a vehicle airbag device according to the present invention is a method for manufacturing a vehicle airbag device including an airbag cushion that restrains a vehicle occupant and an inflator that supplies gas to the airbag cushion,
the airbag cushion including a tubular duct through which gas from the inflator flows from an upstream side to a downstream side, and a check valve that is provided inside the duct and prevents backflow of gas from the downstream side,
the duct in a state in which an inner panel forming one surface and an outer panel forming an opposite surface are joined in a tubular shape,
the inner panel having a first inner panel on the upstream side and a second inner panel on the downstream side which are joined,
the outer panel having a first outer panel on the upstream side and a second outer panel on the downstream side which are joined,
the check valve in a state in which an edge of the first inner panel and an edge of the first outer panel protrude toward the downstream side inside the duct, the method of manufacturing for the vehicle airbag device, comprising:
   a step of joining an edge of the second inner panel to the first inner panel in a state in which an edge of the first inner panel overlaps the second inner panel;
   a step of joining an edge of the second outer panel to the first outer panel in a state in which an edge of the first outer panel overlaps the second outer panel; and
   a step of joining the inner panel and the outer panel in the tubular shape in a state in which the edge of the first inner panel and the edge of the first outer panel face each other.

According to the above configuration, the check valve can be provided in the airbag cushion with a simple configuration, which prevents increases in costs and suppresses the amount of material used, enabling manufacturing an airbag cushion that is easy to fold and stow. In addition, according to the configuration described above, since the internal pressure of the airbag cushion can be efficiently maintained by the check valve, a compact inflator with reduced output can be adopted, and a vehicle airbag device that is easy to stow and has suppressed cost can be manufactured.

The airbag cushion described above may be a side airbag attached to a seat back of the vehicle seat, the inflator may be secured to a side part of the seat and in a state in which a portion or all of the inflator is inserted into the airbag cushion, the airbag cushion may include a first chamber that expands and deploys forward from a first side part of the seat and a second chamber that expands and deploys forward from a second side part of the seat, the duct may extend so as to connect the first chamber and the second chamber, and the step of joining the inner panel and the outer panel in the tubular shape may be performed in a state in which the edge of the first inner panel and the edge of the first outer panel protrude toward the second chamber side.

According to the configuration described above, a side airbag device having high occupant restraint performance and capable of maintaining internal pressure during occupant restraint can be manufactured.

The airbag cushion may be for a curtain airbag attached to an upper part of a vehicle cabin side wall, the inflator may be secured to the upper part of the vehicle cabin side wall and may be in a state in which a portion or all of the inflator is inserted into the airbag cushion, the airbag cushion may include a first chamber that expands and deploys so as to cover a side window of the vehicle cabin side wall and a second chamber that is provided forward or rearward of the first chamber in the vehicle and expands and deploys so as to cover the side window, the duct may extend so as to connect the first chamber and the second chamber, and the step of joining the inner panel and the outer panel in the tubular shape may be performed in a state in which the edge of the first inner panel and the edge of the first outer panel protrude toward the second chamber side.

According to the configuration described above, a curtain airbag device having high occupant restraint performance and capable of maintaining internal pressure during occupant restraint can be manufactured.

To resolve the problems described above, a typical configuration of a vehicle airbag device according to the present invention includes:
an airbag cushion that restrains a vehicle occupant; and
an inflator that supplies gas to the airbag cushion,
wherein
the airbag cushion includes:
   a first chamber that receives gas from the inflator and expands and deploys;
   a duct that extends in a tubular shape from the first chamber;
   a second chamber that receives gas from the first chamber via the duct and expands and deploys; and
   a check valve that is provided in the duct and prevents backflow of gas from the second chamber to the first chamber,
   the check valve is provided on an inner side of the duct and is in a state of extending in a tubular shape from a first chamber side toward a second chamber side, and
   when an inner diameter of the duct is defined as X and a dimension of the check valve in a longitudinal direction of the duct is defined as **Y,** the relationship of 1 ≤ 2Y/X is satisfied.

According to the configuration described above, when the second chamber comes into contact with an occupant or interior components of the vehicle cabin, the check valve can prevent gas from flowing back from the second chamber to the first chamber, thereby maintaining the internal pressure of the second chamber. Therefore, with the configuration described above, the internal pressure is primarily maintained in the second chamber, thereby bending of the airbag cushion is prevented, improving the occupant restraint performance of the airbag cushion. In addition, with the configuration described above, the internal pressure of the airbag cushion can be efficiently maintained, enabling use of a small inflator with reduced output, thereby achieving a vehicle airbag device that is easy to stow and where cost is suppressed.

The duct described above may be configured to connect an upstream portion that forms the first chamber side with a downstream portion that forms the second chamber side, and the check valve may be formed by enclosing the tip end of the upstream portion into the downstream portion.

According to the configuration described above, the check valve can be achieved with a simple configuration, which prevents an increase in costs and suppresses increase in the amount of material used, enabling achieving an airbag cushion that is easy to fold and stow.

The airbag cushion may be for a side airbag attached to a seat back of a vehicle seat, the inflator may be secured to a side part of the seat and may be in a state in which a portion or all of the inflator is inserted into the airbag cushion, the first chamber may expand and deploy forward from a first side part of the seat, the second chamber may expand and deploy forward from a second side part of the seat, and the duct may extend in a width direction of the seat so as to connect the first chamber and the second chamber.

According to the configuration described above, a side airbag device having high occupant restraint performance and capable of maintaining internal pressure during occupant restraint can be achieved.

The airbag cushion may be for a curtain airbag attached to an upper part of a vehicle cabin side wall, the inflator may be secured to the upper part of the vehicle cabin side wall and may be in a state in which a portion or all of the inflator is inserted into the airbag cushion, the first chamber may expand and deploy so as to cover a side window of the vehicle cabin side wall, the second chamber may be provided forward or rearward of the first chamber in the vehicle and may expand and deploy so as to cover the side window, and the duct may extend in a front-to-back direction of the vehicle so as to connect upper parts of the first chamber and the second chamber.

According to the configuration described above, a curtain airbag device having high occupant restraint performance and capable of maintaining internal pressure during occupant restraint can be achieved.

### EFFECT OF THE INVENTION

According to the present invention, a method of manufacturing a vehicle airbag device and a vehicle airbag device having improved occupant restraint performance using a check valve with a simple configuration can be provided.

### BRIEF DESCRIPTION OF THE DRAWINGS

FIG. 1 is a view depicting the outline of a vehicle airbag device according to Embodiment 1 of the present invention;
FIG. 2 is a view depicting the state in which the airbag device of FIG. 1(a) is expanded and deployed;
FIG. 3 is a view depicting the airbag cushion of FIG. 2 as viewed from the side of the seat;
FIG. 4 is a view depicting only the airbag cushion of FIG. 2;
FIG. 5 is a view depicting the vicinity of a duct of the airbag cushion of FIG. 4(a);
FIG. 6 is a view depicting the various states of the duct of FIG. 5(a);
FIG. 7 is a view depicting the outline of a vehicle airbag device according to Embodiment 2 of the present invention;
FIG. 8 is a view depicting only the airbag cushion of FIG. 1(b);
FIG. 9 is a view depicting the vicinity of a duct of the airbag cushion of FIG. 2(a);
FIG. 10 is a view depicting the various states of the duct of FIG. 2(a);
FIG. 11 is a view depicting test results of investigating the effectiveness of the check valve of FIG. 3(a);
FIG. 12 is a view depicting an example of an outline of a method of manufacturing a vehicle airbag device according to the present invention;
FIG. 13 is a view depicting steps for manufacturing the inner panel and outer panel of FIG. 12;
FIG. 14 is a view depicting a state in which the inner panel and the outer panel of FIG. 13 are overlapped; and
FIG. 15 is a view depicting an airbag cushion manufactured from the inner panel and outer panel of FIG. 14(a).

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

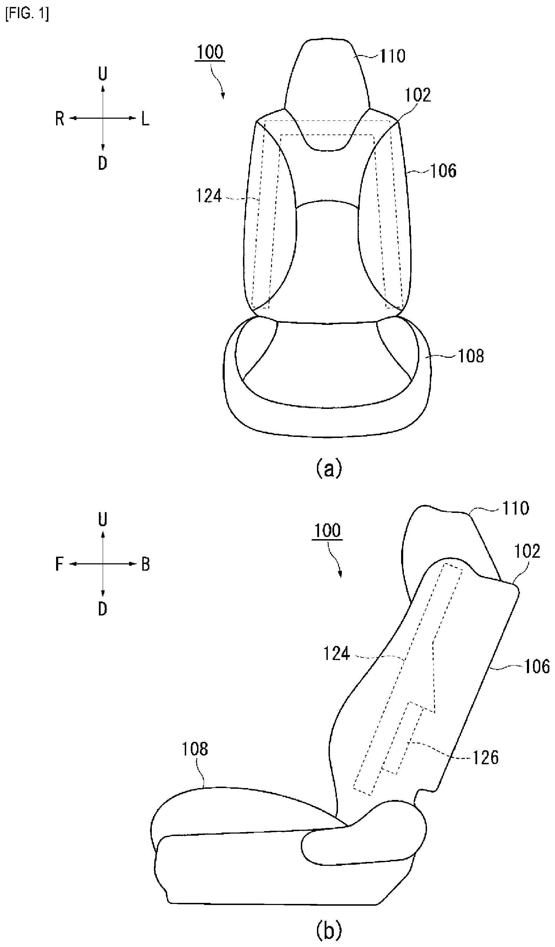

FIG. 1 depicts an overview of the vehicle airbag device (hereinafter, airbag device 100) according to Embodiment 1 of the present invention. In Embodiment 1, the airbag device 100 is implemented as a side airbag device. FIG. 1(a) is a view depicting the airbag device 100 from the front of a seat 102 before activation. FIG. 1(b) is a view depicting the airbag device 100 of FIG. 1(a) from the left side of the seat 102.

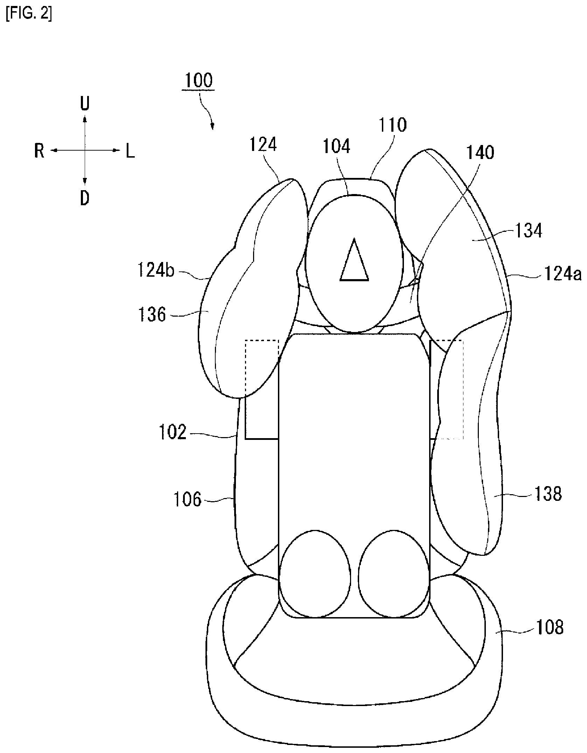

FIG. 2 is a view depicting the state in which the airbag device 100 of FIG. 1(a) is expanded and deployed. An occupant 104 in FIG. 2 is assumed to be seated in the vehicle seat 102 in a normal posture.

Regarding the present embodiment, when the occupant 104 is seated in the seat 102 in a normal posture, the direction the occupant 104 faces is referred to as front, and the opposite direction is referred to as back. In addition, when the occupant 104 is seated in the seat 102 in a normal posture, the right of the occupant 104 is referred to as the right direction, and the left of the occupant 104 is referred to as the left direction. Furthermore, when the occupant 104 is seated in a normal posture, the direction towards the head of the occupant 104 is referred to as up, and the direction towards the legs of the occupant 104 is referred to as down. In FIG. 1 to FIG. 3, which are used in the description of Embodiment 1, the front, back, left, right, up and down directions relative to the above-mentioned occupant are depicted as arrows F (Front), B (Back), L (Left), R (Right), U (Up), and D (Down), respectively, as necessary.

Generally, a seat in a vehicle may be capable of rotating in any direction. Therefore, the directions relative to the occupant 104 seated in the seat 102 may differ from the directions relative to the vehicle. In the present embodiment, the directions of "up", "down", and "up and down" of the vehicle refer to directions on a line connecting the center of the ceiling of the vehicle and the center of the floor, with the direction toward the ceiling referred to as "up" and the direction toward the floor referred to as "down". With regard to the "front", "back", and "front-to-back" directions of a vehicle, the forward moving direction of the vehicle is defined as the "front" direction, and the backward moving direction of the vehicle is defined as the "back" direction. Furthermore, the width direction of the vehicle is the direction in which normal seats are arranged side by side, and refers to the direction perpendicular to the above-mentioned "front-to-back" direction.

The occupant 104 in FIG. 2 is an example of a dummy used in automobile crash testing. Dummies that can be used for the occupant 104 include, for example, Hybrid III AM50 and AF05 dummies for frontal crash tests. The AM50 is a dummy modeled after a male with a height of 175 cm and a weight of 78 kg, and whose physical build corresponds to the 50th percentile of American adult male. The AF05 is a dummy that is modeled after a small female with a height of 145 cm, a seated height of 79 cm, and a weight of approximately 45 kg.

In addition to the above-mentioned frontal collision dummy, the occupant 104 may be a side collision dummy, a child dummy, or even a rear collision dummy, as appropriate. These dummies are based on US National Highway Traffic Safety Association (NHTSA) standards.

Refer to FIG. 1 again. The seat 102 depicted in FIG. 1(a) is intended to be a right-side front seat (for example, a driver's seat) in a vehicle, and has a seat back 106 that supports the back of the occupant 104 (see FIG. 2), a seat cushion 108 that supports the buttocks of the occupant 104, and a headrest 110 that supports the head of the occupant 104.

An airbag cushion 124 of the airbag device 100 of the present embodiment is rolled or folded into a long stowage form and is built into the seat back 106 along the left and right side parts and the upper part of the seat back 106.

As depicted in FIG. 1(b), the airbag device 100 is provided with an inflator 126, which is a gas generating device. The inflator 126 is built into the seat back together with the airbag cushion 124, and is secured to, for example, a side frame that forms the framework of the seat back.

In the present embodiment, the inflator 126 is a tubular shape cylindrical inflator, and is installed in a state of being partially or entirely inserted into the airbag cushion 124.

Examples of currently prevailing inflators include: types which are filled with a gas-generating agent and burn the agent to generate gas; types which are filled with compressed gas and supply gas without generating heat; hybrid types which utilize both combustion gas and compressed gas; and the like. Any of these types can be used for the inflator 126.

The airbag device 100 is activated when a side collision, rollover, or the like is predicted or detected by various sensors. At this time, the inflator 126 receives a signal from a control unit (not depicted) and discharges gas into the airbag cushion 124. The airbag cushion 124 cleaves the surface of the seat back 106 by the pressure of gas supplied from the inflator 126 and expands and deploys.

As depicted in FIG. 2, the airbag cushion 124 expands and deploys to cover the occupant 104 from the left and right, thereby restraining the occupant 104. The airbag cushion 124 includes a first chamber 134 and a third chamber 138 that expand and deploy mainly on the left side of the seat back 106, a second chamber 136 that expands and deploys mainly on the right side of the seat back 106, and a duct 140 that connects the first chamber 134 and the second chamber 136.

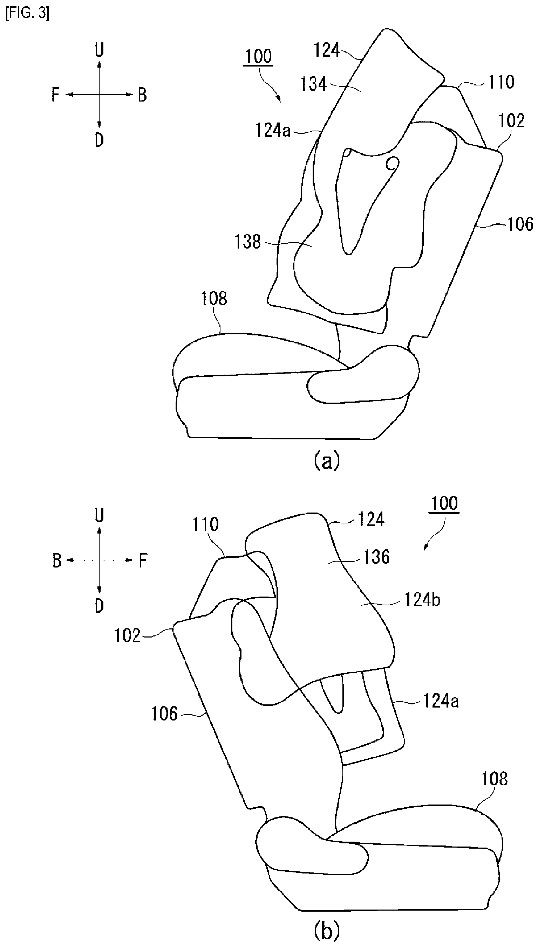

FIG. 3 is a view depicting the airbag cushion 124 of FIG. 2 as viewed from the side of the seat 102. FIG. 3(a) is a view depicting the airbag cushion 124 of FIG. 2 as viewed from the left side of the seat 102.

The first chamber 134 expands and deploys from the left side part of the seat back 106 toward the front of the seat back 106. The first chamber 134 expands and deploys to cover the area from the seat back 106 to the headrest 110 from the left side, restraining mainly the upper body and head of the occupant 104 (see FIG. 2) from the left side.

The third chamber 138 expands and deploys forward from the seat back 106 below the first chamber 134, and restrains mainly the chest, abdomen, and other parts of the occupant 104 (see FIG. 2).

FIG. 3(b) is a view depicting the airbag cushion 124 of FIG. 2 as viewed from the right side of the seat 102. The second chamber 136 expands and deploys from the right side part of the seat back 106 toward the front of the seat back 106. The second chamber 136 expands and deploys to cover the area from the seat back 106 to the headrest 110 from the right side, and restrains mainly the upper body and head of the occupant 104 (see FIG. 2) from the left side.

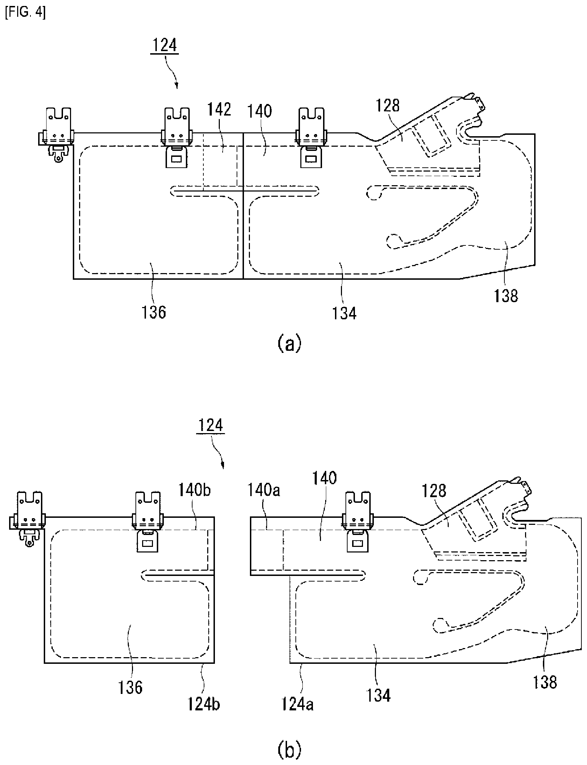

FIG. 4 is a view depicting only the airbag cushion 124 of FIG. 2. FIG. 4(a) is a view depicting the airbag cushion 124 laid out on a flat surface.

The airbag cushion 124 is formed into a bag-like shape as a whole by, for example, sewing the front and back of the base fabric that forms the surface of the airbag cushion 124 together or by weaving using an OPW (One-Piece Woven) method.

As described above, the airbag cushion 124 has the first chamber 134, the second chamber 136, and the third chamber 138 as expandable parts that are expanded and deployed by gas.

The first chamber 134 expands and deploys slightly above the left side of the seat 102 (see FIG. 3(a)). The first chamber 134 has an inflator mounting part 128 provided at an upper part thereof, and is expanded and deployed by first receiving gas from the inflator 126 (see FIG. 1(b)).

The second chamber 136 expands and deploys on the right side of the seat 102 (see FIG. 3(b)). The second chamber 136 is connected to the first chamber 134 by a duct 140, and receives gas from the first chamber 134 via the duct 140 to expand and deploy.

The third chamber 138 is expanded and deployed at a lower part of the left side of the seat 102 (see FIG. 3(a)). The third chamber 138, together with the first chamber 134, receives gas directly from the inflator mounting part 128 and expands and deploys.

The duct 140 extends in a tubular shape from the first chamber 134 and conveys gas from the first chamber 134 to the second chamber 136. When the airbag cushion 124 depicted in FIG. 2 is expanded and deployed, the duct 140 extends in the width direction of the seat 102 so as to connect the first chamber 134 and the second chamber 136.

FIG. 4(b) is an exploded view of the airbag cushion 124 of FIG. 4(a). The airbag cushion 124 of the present embodiment is formed by joining a cushion left side part 124a disposed on the left side of the seat 102 (see FIG. 2) and a cushion right side part 124b disposed on the right side of the seat 102. The cushion left side part 124a is mainly configured to include a first chamber 134, a third chamber 138, and an inflator mounting part 128. The cushion right side part 124b is mainly configured to include a second chamber 136.

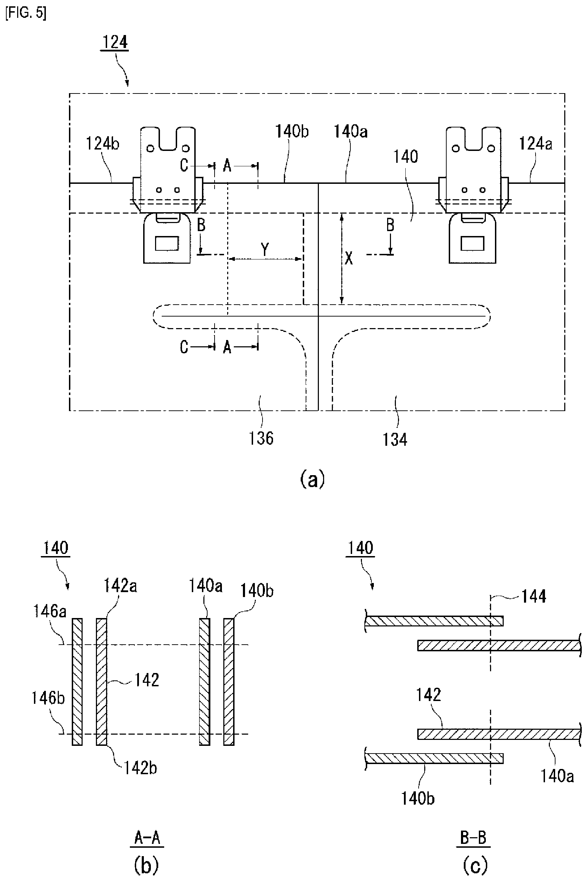

FIG. 5 is a view depicting the vicinity of the duct 140 of the airbag cushion 124 in FIG. 4(a). FIG. 5(a) is an enlarged view of the duct 140 of the airbag cushion 124 of FIG. 4(a).

The duct 140 is an upstream portion 140a connected to a downstream portion 140b. The upstream portion 140a is formed on the cushion left side part 124a on the first chamber 134 side. The downstream portion 140b is formed on the cushion right side part 124b on the second chamber 136 side.

A check valve 142 is provided inside the duct 140 as an element for preventing backflow of gas. The check valve 142 prevents gas from flowing back from the second chamber 136 to the first chamber 134, allowing the internal pressure of the second chamber 136 to be maintained for a longer period of time.

FIG. 5(b) is a schematic cross-sectional view of the duct 140 taken along A-A of FIG. 5(a). The check valve 142 has a double structure in which the upstream portion 140a and the downstream portion 140b are overlapped.

FIG. 5(c) is a schematic cross-sectional view of the duct 140 taken along B-B of FIG. 5(a). The check valve 142 is formed by enclosing the tip end side of the upstream portion 140a within the downstream portion 140b. The tip end side of the downstream portion 140b is joined to the upstream portion 140a from the outside by a joint part 144 such as by sewing. As a result, the upstream portion 140a from the joint part 144 to the tip end side functions as a check valve 142.

The check valve 142 is not joined to the downstream portion 140b in the vehicle width direction. On the other hand, as depicted in FIG. 5(b), the upper part 142a and lower part 142b of the check valve 142 are joined to the downstream portion 140b by joint parts 146a and 146b.

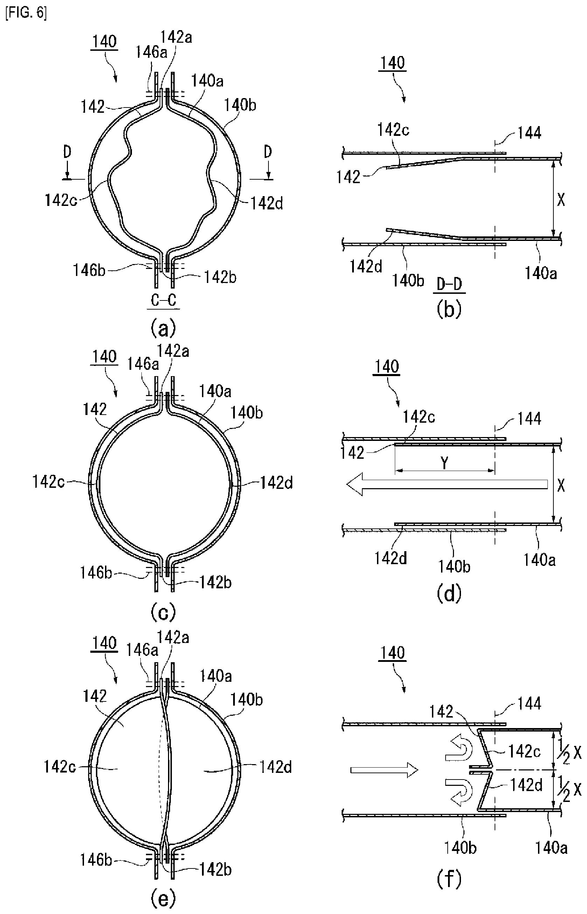

FIG. 6 is a view depicting various states of the duct 140 in FIG. 5(a). FIG. 6(a) is a view depicting the check valve 142 as viewed from the front, corresponding to the C-C cross section of the duct 140 in FIG. 4(a).

FIG. 6(a) depicts an example of the duct 140 before gas flows therethrough. As described above, the check valve 142 is configured such that the tip end side of the upstream portion 140a is enclosed within the downstream portion 140b.

FIG. 6(b) is a view depicting the check valve 142 as viewed from above, corresponding to the cross section along D-D of the duct 140 in FIG. 6(a). The check valve 142 has a right side portion 142c and a left side portion 142d in the vehicle width direction that are not joined to the downstream portion 140b.

FIG. 6(c) is a view depicting a state in which the check valve 142 in FIG. 6(a) is open. When the internal pressure of the first chamber 134 (see FIG. 3(a)) on the upstream side increases, the check valve 142 opens as if being pushed apart, allowing gas to flow toward the second chamber 136 side.

FIG. 6(d) is a view depicting a state in which the check valve 142 in FIG. 6(b) is open. When gas flows from the first chamber 134 (see FIG. 3(a)) to the second chamber 136, the check valve 142 is spread along the inside of the downstream portion 140b.

FIG. 6(e) is a view depicting a state in which the check valve 142 in FIG. 6(c) is closed. When the internal pressure of the second chamber 136 (see FIG. 3(a)) becomes higher than that of the first chamber 134 due to contact with an occupant or a structure inside the vehicle cabin, the gas tries to return to the first chamber 134, and the check valve 142 is pushed back to the first chamber 134. At this time, the check valve 142 has upper part 142a and lower part 142b thereof joined to the downstream portion 140b by joint parts 146a and 146b, so that the right side portion 142c and left side portion 142d close toward the center to block the duct 140.

FIG. 6(f) is a view depicting a state in which the check valve 142 in FIG. 6(d) is closed. When gas attempts to flow back from the second chamber 136 (see FIG. 3(a)) to the first chamber 134, the check valve 142 moves away from the inner wall of the downstream portion 140b in the vehicle width direction, and the right side portion 142c and the left side portion 142d close toward the center. The check valve 142 thereby prevents gas from flowing back from the second chamber 136 to the first chamber 134.

In the present embodiment, the size of the check valve 142 is set based on the inner diameter of the duct 140. More specifically, as depicted in FIG. 6(d), when the inner diameter of the duct 140 is X and the dimension of the check valve 142 in the longitudinal direction of the duct 140 is Y, the length Y of the duct 140 is set to be at least half the inner diameter X of the duct 140 (X/2≦Y). In other words, the inner diameter X of the duct 140 and the dimension Y of the check valve 142 have a relationship of 1≦2Y/X. With this configuration, as depicted in FIG. 6(f), the right side portion 142c and left side portion 142d of the check valve 142 having the dimension Y can each close half of the duct 140 having the inner diameter X from the left and right sides.

In the case of the airbag cushion 124 (see FIG. 4(a)) having the above-mentioned check valve 142, when the second chamber 136 comes into contact with an occupant or interior components of the vehicle cabin, the check valve 142 can prevent gas from returning from the second chamber 136 to the first chamber 134, thereby maintaining the internal pressure of the second chamber 136. Therefore, the airbag cushion 124 mainly maintains the internal pressure of the second chamber 136 when the occupant is restrained, thereby preventing the airbag cushion 124 from bending, thereby improving the occupant restraint performance.

In addition, in the present embodiment, the tip end side of the upstream portion 140a is enclosed within the downstream portion 140b, thereby achieving a check valve 142 with a simple configuration. According to this configuration, an increase in the amount of panel material used to form the airbag cushion 124 can be suppressed, thereby preventing an increase in cost and enabling achieving an airbag cushion 124 in which an increase in material is suppressed and which is easy to fold and easy to stow.

In the present embodiment, the check valve 142 can efficiently maintain the internal pressure of the airbag cushion 124, so that a small inflator with suppressed output can be used as the inflator 126. Therefore, an airbag device 100 that is easy to stow and where costs are suppressed can be achieved.

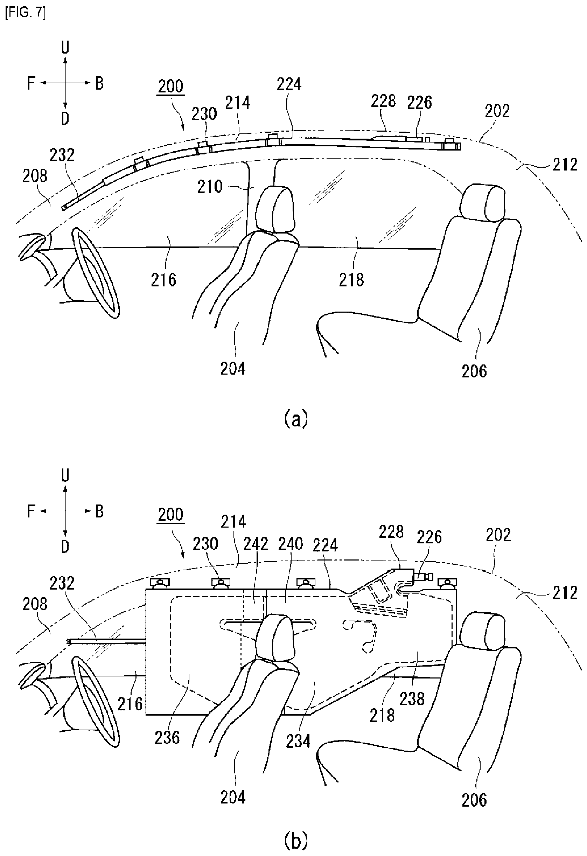

FIG. 7 depicts an overview of the vehicle airbag device (hereinafter, airbag device 200) according to Embodiment 2 of the present invention. In Embodiment 2, the airbag device 200 is implemented as a curtain airbag device for the right side of the vehicle compartment. FIG. 7(a) is a view depicting a state before activation of the airbag device 200.

In the following, in FIGS. 7 to 10 used to describe Embodiment 2, the front-to-back direction of the vehicle is indicated by arrows F (Forward) and B (Back), the left and right directions in the vehicle width direction are indicated by arrows L (Left) and R (Right), and the vertical direction of the vehicle is indicated by arrows U (Up) and D (Down). In particular, "upward" refers to a direction towards the head as viewed from an occupant properly seated on a seat, and "downward" refers to a direction towards the lower limbs as viewed from the occupant.

The vehicle 202 is assumed to be a two-row vehicle with a front row seat 204 and rear row seat 206 arranged from the front side of the vehicle. The vehicle 202 is provided with a plurality of pillars that support the roof. The plurality of pillars includes, from the front of the vehicle, an A-pillar 208, a B-pillar 210, and a C-pillar 212.

A roof side rail 214 is a member that forms the upper part of the side wall of the vehicle compartment. The roof side rail 214 is covered by a roof trim (not depicted). Side windows 216 and 218 are formed on the side walls of the vehicle compartment as areas surrounded by the roof side rails 214 and each pillar.

Before activation, an airbag cushion 224 of the airbag device 200 is rolled or folded into a stowed form that is long in the front-to-back direction of the vehicle. The airbag cushion 224 is attached along the roof side rail 214 starting at near the A-pillar 208. Before being activated, the airbag cushion 224 is covered by a roof trim (not depicted) and is therefore not visible to the occupants.

The airbag device 200 includes an inflator 226 as a gas generating device that supplies gas to the airbag cushion 224. In the present embodiment, the inflator 226 is a tubular shape cylindrical inflator, and is secured to the roof side rail 214 with a portion or all thereof inserted into the airbag cushion 224. The airbag cushion 224 is provided with an inflator mounting part 228 at the rear upper part as a portion for mounting the inflator 226.

Examples of currently prevailing inflators include: types which are filled with a gas-generating agent and burn the agent to generate gas; types which are filled with compressed gas and supply gas without generating heat; hybrid types which utilize both combustion gas and compressed gas; and the like. Any of these types can be used for the inflator 226.

FIG. 7(b) is a view depicting a vehicle after activation of the driver seat airbag device 200. The airbag device 200 is activated when an offset collision or a side collision is predicted or detected by various sensors.

The inflator 226 is activated upon receiving a signal from a control unit (not depicted) and discharges gas. The airbag cushion 224 pushes aside the roof trim (not depicted) by the pressure of gas supplied from the inflator 226, and expands and deploys to cover the side windows 216 and 218, preventing the occupant from being thrown out of the vehicle.

The airbag cushion 224 expands and deploys widely in the front-to-back direction of the vehicle along the side windows 216 and 218 on the vehicle exterior sides of the front row seat 204 and rear row seat 206. The expansion parts of the airbag cushion 224 are divided into small rooms called chambers, such as a first chamber 234, depending on the flow of gas and structural objects such as the occupant and the seat.

The airbag cushion 224 has a plurality of tabs 230 at an upper edge thereof, which serve as portions for securing the airbag cushion 224 to the roof side rail 214. The tab 230 is a strip-shaped portion that is secured to the roof side rail 214 using a bracket, a bolt, or the like.

A strap 232 is provided on the front end side of the airbag cushion 224. The strap 232 is a string-like member that is connected to the A-pillar 208 and suppresses swinging of the airbag cushion 224 when the airbag cushion is expanded and deployed. This enables the airbag cushion 224 to quickly cover the object area. A similar strap may also be used to connect the rear end of the airbag cushion 224 to the C-pillar 212.

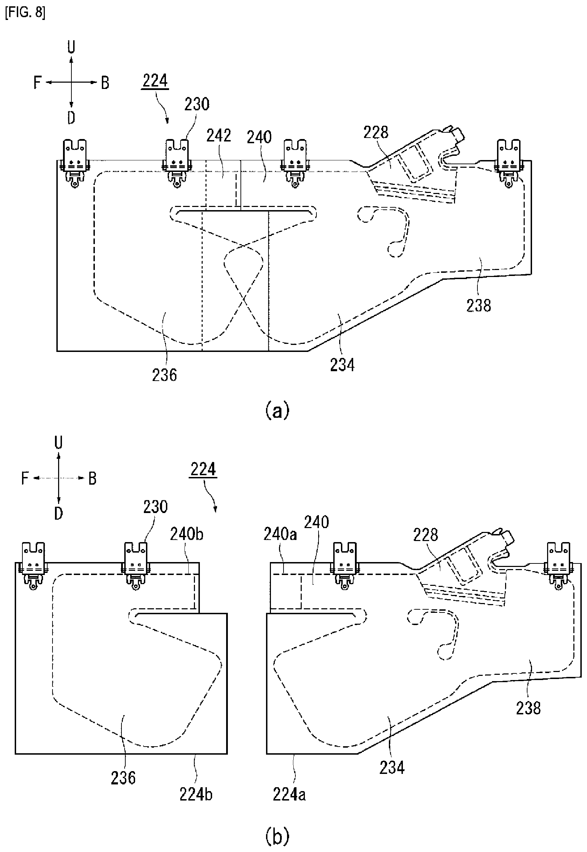

FIG. 8 is a view depicting only the airbag cushion 224 of FIG. 7(b). FIG. 8(a) depicts an overall schematic view of the airbag cushion 224.

The airbag cushion 224 is formed into a bag-like shape as a whole by, for example, sewing the front and back of the base fabric that forms the surface of the airbag cushion together or by weaving using an OPW (One-Piece Woven) method.

The airbag cushion 224 has the first chamber 234, a second chamber 236, and a third chamber 238 as inflation sections that are expanded and deployed by gas.

The first chamber 234 expands and deploys to cover a side window 218 slightly forward of the rear row seats 206 (see FIG. 7(b)). The first chamber 234 has an inflator mounting part 228 provided at an upper part thereof, and is expanded and deployed by first receiving gas from the inflator 226 (see FIG. 7(b)).

The second chamber 236 is provided in front of the first chamber 234 and expands and deploys to cover a side window 216 on the side of the front row seats 204 (see FIG. 7(b)). The second chamber 236 is connected to the first chamber 234 by a duct 240, and receives gas from the first chamber 234 via the duct 240 to expand and deploy.

The third chamber 238 is provided slightly behind the rear row seats 206 (see FIG. 7(b)), and together with the first chamber 234, receives gas from the inflator 226 and expands and deploys to cover the side window 218.

The duct 240 extends in a tubular shape from the first chamber 234 toward the front of the vehicle and delivers gas from the first chamber 234 to the second chamber 236. The duct 240 extends linearly in the front-to-back direction of the vehicle so as to connect the upper parts of the first chamber 234 and the second chamber 236.

FIG. 8(b) is an exploded view of the airbag cushion 224 of FIG. 8(a). The airbag cushion 224 of the present embodiment is formed by joining a cushion rear part 224a on the vehicle rear side and a cushion front part 224b on the vehicle front side. The cushion rear part 224a is mainly configured to include a first chamber 234, a third chamber 238, and an inflator mounting part 228. The cushion front part 224b is composed primarily of the second chamber 236.

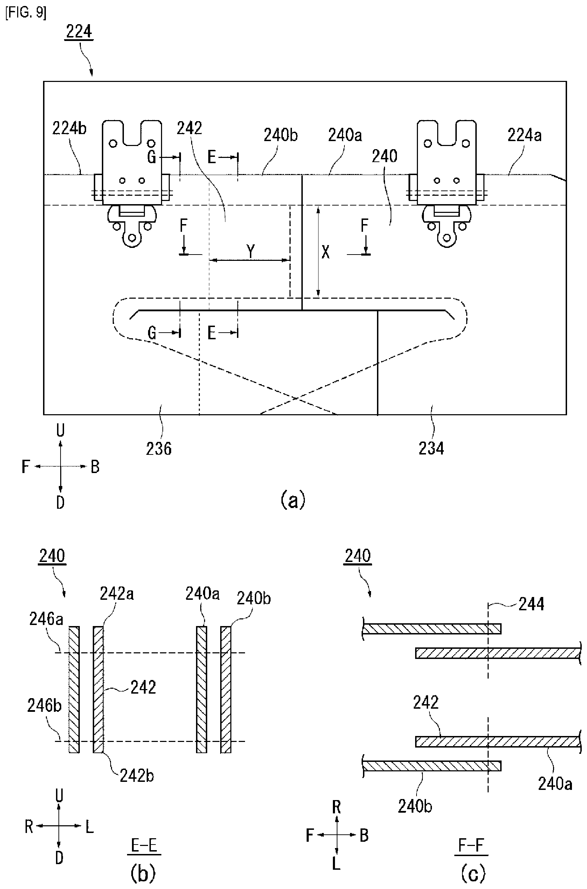

FIG. 9 is a view depicting the vicinity of the duct 240 of the airbag cushion 224 in FIG. 8(a). FIG. 9(a) is an enlarged view of the duct 240 of the airbag cushion 224 of FIG. 8(a).

The duct 240 is an upstream portion 240a connected to a downstream portion 240b. The upstream portion 240a is formed in the cushion rear part 224a on the first chamber 234 side. The downstream portion 240b is formed on the cushion front part 224b on the second chamber 236 side.

A check valve 242 is provided inside the duct 240 as an element for preventing backflow of gas. The check valve 242 prevents gas from flowing back from the second chamber 236 to the first chamber 234, allowing the internal pressure of the second chamber 236 to be maintained for a longer period of time.

FIG. 9(b) is a schematic cross-sectional view of the duct 240 taken along E-E in FIG. 9(a). The check valve 242 has a double structure in which the upstream portion 240a and the downstream portion 240b are overlapped.

FIG. 9(c) is a schematic cross-sectional view of the duct 240 taken along F-F of FIG. 9(a). The check valve 242 is formed by enclosing the tip end side of the upstream portion 240a within the downstream portion 240b. The tip end side of the downstream portion 240b is joined to the upstream portion 240a from the outside by a joint part 244, such as by sewing. As a result, the upstream portion 240a from the joint part 244 to the tip end side functions as the check valve 242.

The check valve 242 is not joined to the downstream portion 2 4 0 b in the vehicle width direction. On the other hand, as depicted in FIG. 9(b), the upper part 242a and lower part 242b of the check valve 242 are joined to the downstream portion 240b by joint parts 246a and 246b.

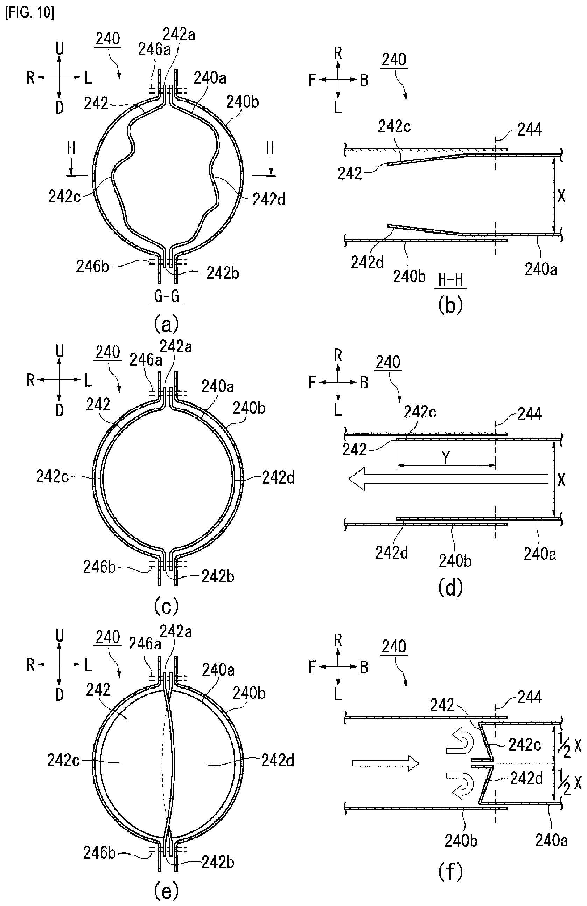

FIG. 10 is a view depicting various states of the duct 240 in FIG. 9(a). FIG. 10(a) is a view depicting the check valve 242 as viewed from the front, corresponding to the G-G cross section of the duct 240 in FIG. 8(a).

FIG. 10(a) depicts an example of the duct 240 before gas flows therethrough. As described above, the check valve 242 is configured such that the tip end side of the upstream portion 240a is enclosed within the downstream portion.

FIG. 10(b) is a view depicting the check valve 242 as viewed from above, corresponding to the cross section along H-H of the duct 240 in FIG. 10(a). The check valve 242 has a right side portion 242c and a left side portion 242d in the vehicle width direction that are not joined to the downstream portion 240b.

FIG. 10(c) is a view depicting a state in which the check valve 242 in FIG. 10(a) is open. When the internal pressure of the first chamber 234 (see FIG. 9(a)) on the upstream side increases, the check valve 242 opens as if being pushed apart, allowing gas to flow toward the second chamber 236 side.

FIG. 10(d) is a view depicting a state in which the check valve 242 in FIG. 10(b) is open. When gas flows from the first chamber 234 (see FIG. 9(a)) to the second chamber 236, the check valve 242 is spread along the inside of the downstream portion 240b.

FIG. 10(e) is a view depicting a state in which the check valve 242 in FIG. 10(c) is closed. When the internal pressure of the second chamber 236 (see FIG. 9(a)) becomes higher than that of the first chamber 234 due to contact with an occupant or a structure inside the vehicle cabin, the gas tries to return to the first chamber 234, and the check valve 242 is pushed back to the first chamber 234. At this time, the check valve 242 has upper part 242a and lower part 242b thereof joined to the downstream portion 240b by joint parts 246a and 246b, so that the right side portion 242c and left side portion 242d close toward the center to block the duct 240.

FIG. 10(f) is a view depicting a state in which the check valve 242 in FIG. 10(d) is closed. When gas attempts to flow back from the second chamber 236 (see FIG. 9(a)) to the first chamber 234, the check valve 242 moves away from the inner wall of the downstream portion 240b in the vehicle width direction, and the right side portion 242c and the left side portion 242d close toward the center. The check valve 242 thereby prevents gas from flowing back from the second chamber 236 to the first chamber 234.

In the present embodiment, the size of the check valve 242 is set based on the inner diameter of the duct 240. More specifically, as depicted in FIG. 10(d), when the inner diameter of the duct 240 is X and the dimension of the check valve 242 in the longitudinal direction of the duct 240 is Y, the length Y of the duct 240 is set to be at least half the inner diameter X of the duct 240 (X/2≦Y). In other words, the inner diameter X of the duct 240 and the dimension Y of the check valve 242 have a relationship of 1≦2Y/X. With this configuration, as depicted in FIG. 10(f), the right side portion 242c and left side portion 242d of the check valve 242 having the dimension Y can each close half of the duct 240 having the inner diameter X from the left and right sides.

In the case of the airbag cushion 224 having the above-mentioned check valve 242, when the second chamber 236 comes into contact with an occupant or interior components of the vehicle cabin, the check valve 242 can prevent gas from returning from the second chamber 236 to the first chamber 234, thereby maintaining the internal pressure of the second chamber 236. Therefore, the airbag cushion 224 largely maintains the internal pressure in the second chamber 236, and thereby prevents the airbag cushion 224 from bending, thereby improving the occupant restraint performance.

In addition, in the present embodiment, the tip end side of the upstream portion 240a is enclosed within the downstream portion 240b, thereby achieving a check valve 242 with a simple configuration. According to this configuration, an increase in the amount of panel material used to form the airbag cushion 224 can be suppressed, thereby preventing an increase in cost and enabling achieving an airbag cushion 224 in which an increase in material is suppressed and which is easy to fold and easy to stow.

In the present embodiment, the check valve 242 can efficiently maintain the internal pressure of the airbag cushion 224, so that a small inflator where output is suppressed can be used as the inflator 226. Therefore, an airbag device 200 that is easy to stow and has reduced costs can be achieved.

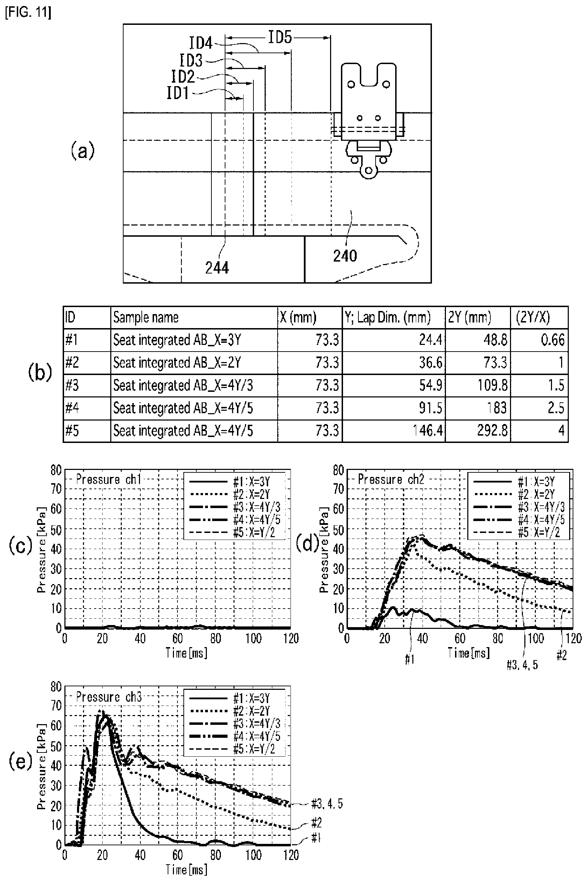

FIG. 11 is a view depicting the results of a test conducted to examine the effects of the check valves 142 and 242 of the above-described embodiments. FIG. 11(a) is a view depicting the conditions of each sample product. The test was carried out to confirm whether the check valve having the above-described configuration functions properly. In this test, each check valve was set in the opposite direction to that depicted in FIG. 9(a) to verify whether or not stopping gas from flowing from the first chamber 234 to the second chamber 236 was possible when the inflator 226 was activated.

FIG. 11(b) is a table depicting examples of the test conditions for each sample product. The ID column lists the numbers 1 to 5 for each sample product. The column of sample product name describes the conditions of the inner diameter X of the duct 240 and the dimension Y of the check valve for each sample product as a relational expression.

The column X (mm) indicates the inner diameter of the duct 240 of each sample product. The test was carried out with the inner diameter X of the duct 240 of each sample product being set to approximately 73.3 mm. The inner circumference of the duct 240 is about 115.1 mm. Therefore, the relational expression 115.1×2/π=73.3 holds true.

The column Y; Lap Dim. (mm) notes the dimension Y of the check valve for each sample product. The column 2Y (mm) notes the value obtained by doubling the dimension Y of the check valve of each sample product. The column (2Y/X) lists the values obtained when the dimensions X and Y of each sample product are applied to the right side of the relational expression (1≦2Y/X), which is a condition of the present invention.

As can be seen from the values of (2Y/X), sample products 2 to 5 are examples that satisfy the condition of the present invention(1≤2Y/X). Sample product 1 is a comparative example that does not satisfy the above-mentioned conditions of the invention, and the value is 0.66, which is less than 1.

FIG. 11(c) to FIG. 11(e) are the test results of the pressure in each chamber. The vertical axis represents pressure and the horizontal axis represents time.

FIG. 11(c) is the test results of the pressure in the second chamber 236 (see FIG. 8(a)). In all of sample products 1 to 5, increase in the pressure in the second chamber 236 is prevented. In other words, for the check valves under any of the conditions of sample product 1 to sample product 5 depicted in FIG. 11(b), confirmation was obtained that the duct 240 can be blocked during activation of the inflator 226.

FIG. 11(d) is the test results of the pressure in the first chamber 234 (see FIG. 8(a)). Sample product 1 exhibited a lower increase in internal pressure than sample products 2 to 5. In other words, the dimension Y of the check valve in sample product 1 was confirmed to be small, so that pressure was easily released into the second chamber 236. Sample product 2 exhibited an internal pressure value that was approximately four times higher than that of sample product 1. Tests 3 to 5 each exhibited a similar, but still higher, internal pressure than sample product 2.

FIG. 11(e) is the test results for the pressure in the third chamber 238 (see FIG. 8(a)). Since the third chamber 238 is supplied with gas directly from the inflator 226 at a position away from the duct 240, sample products 1 to 5 initially exhibited approximately the same internal pressure values. However, with sample product 1, confirmation was obtained that the internal pressure tends to decrease over time more readily than in sample products 2 to 5.

These tests depicted in FIG. 11(c) to FIG. 11(e) confirmed that sample products 2 to 5, which satisfied the conditions of the invention (1≦2Y/X), were able to prevent backflow of gas from the target chamber and maintain the internal pressure of the surrounding chamber for a longer period of time.

From the above, confirmation was obtained that, in the airbag cushions 124 and 224 in which the inner diameter X of the ducts 140 and 240 and the dimension Y of the check valves 242 satisfy the relationship of 1 ≤ 2Y/X as depicted in FIG. 4(a) and FIG. 8(a), return of gas from the second chambers 136 and 236 to the first chambers 134 and 234 is prevented by the check valves 142 and 242 when the second chambers 136 and 236 come into contact with an occupant, interior components of a vehicle cabin, or the like. As a result, internal pressure of the second chambers 136 and 236 and the first chambers 134 and 234 can be maintained over a longer period of time, and high occupant restraint performance can be exhibited.

Note that with the airbag cushion 124 according to Embodiment 1 depicted in FIG. 4(a), the inflator 126 can also be disposed on the right side of the airbag cushion 124. In addition, with the airbag cushion 224 according to Embodiment 2 depicted in FIG. 8(a), the inflator 226 can also be disposed on the front side of the airbag cushion 224. Even in these cases, for example, backflow of gas from the right-side chamber to the left-side chamber of the airbag cushion 124 depicted in FIG. 4(a) can be prevented, or backflow of gas from the rear-side chamber to the front-side chamber of the airbag cushion 224 depicted in FIG. 8(a) can be prevented by changing the orientation of the check valves 142 and 242.

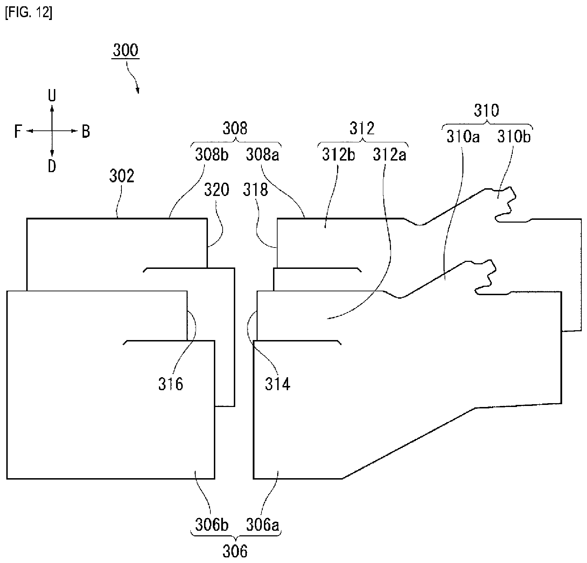

FIG. 12 is a view depicting an example of an outline of a method of manufacturing a vehicle airbag device (hereinafter referred to as airbag device 300) according to the present invention. The method of manufacturing of the airbag device 300 enables simple manufacturing of an airbag cushion 302 having a check valve 304 inside a duct 312.

The airbag cushion 302 is a member for restraining a vehicle occupant, and can be assumed to be for a curtain airbag, similar to the airbag cushion 224 in FIG. 8, for example.

The airbag cushion 302 is manufactured by joining an inner panel 306 that forms the surface facing inside the vehicle and an outer panel 308 that forms the surface facing outside the vehicle, thereby forming a bag-shaped expandable part.

The inner panel 306 and the outer panel 308 are each manufactured by joining two panels together. For example, the inner panel 306 is manufactured by joining together a first inner panel 306a on the upstream side having an inflator mounting part 310a and a second inner panel 306b on the downstream side. The outer panel 308 is manufactured by joining together a first outer panel 308a on the upstream side having an inflator mounting part 310b and a second outer panel 308b on the downstream side.

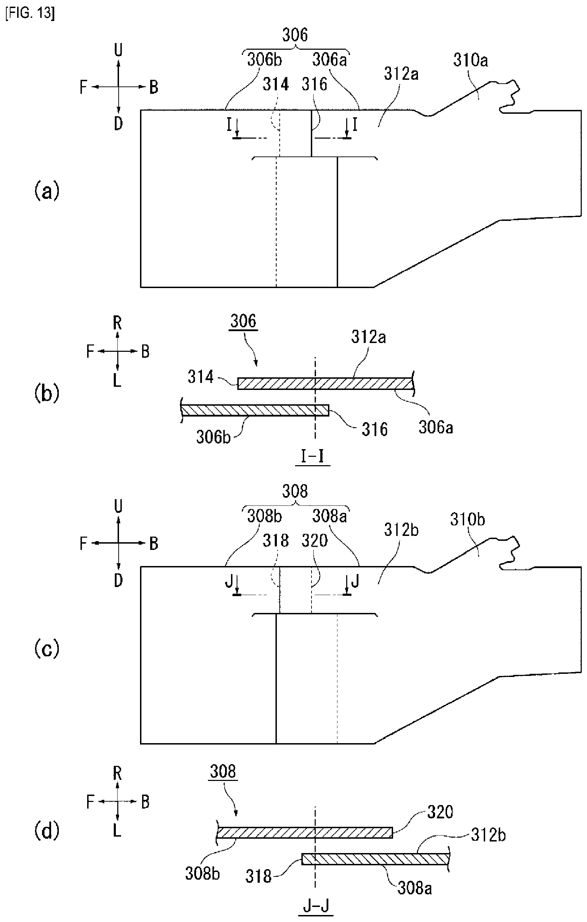

FIG. 13 is a view depicting the steps of manufacturing the inner panel 306 and the outer panel 308 of FIG. 12. FIG. 13(a) is a view depicting a process for manufacturing the inner panel 306 of FIG. 12.

The inner panel 306 is arranged such that a prescribed area including an edge 314 of the upstream first inner panel 306a overlaps the second inner panel 306b, and an edge 316 of the second inner panel 306b is joined to the first inner panel 306a.

FIG. 13(b) is a cross-sectional view of the duct 312a of the inner panel 306 taken along line I-I of FIG. 13(b).

The first inner panel 306a is placed on the outer side of the second inner panel 306b, that is, on the inner side of the airbag cushion 302 (see FIG. 12). In this state, the edge 316 of the second inner panel 306b is joined to the first inner panel 306a. As a result, the edge 314 of the first inner panel 306a is formed in a state of protruding toward the downstream side of the duct 312a inside the second inner panel 306b.

FIG. 13(c) is a view depicting a process for manufacturing the outer panel 308 of FIG. 12.

The outer panel 308 also overlaps the second outer panel 308b over a prescribed area including an edge 318 of the upstream first outer panel 308a, and an edge 320 of the second outer panel 308b is joined to the first outer panel 308a.

FIG. 13(d) is a cross-sectional view of a duct 312b of the outer panel 308 taken along the line J-J in FIG. 13(c).

The first outer panel 308a is placed on the vehicle interior side of the second outer panel 308b, that is, on the inside of the airbag cushion 302 (see FIG. 12). In this state, the edge 320 of the second outer panel 308b is joined to the first outer panel 308a. As a result, the edge 318 of the first outer panel 308a is formed in a state of protruding toward the downstream side of the duct 312b inside the second outer panel 308b.

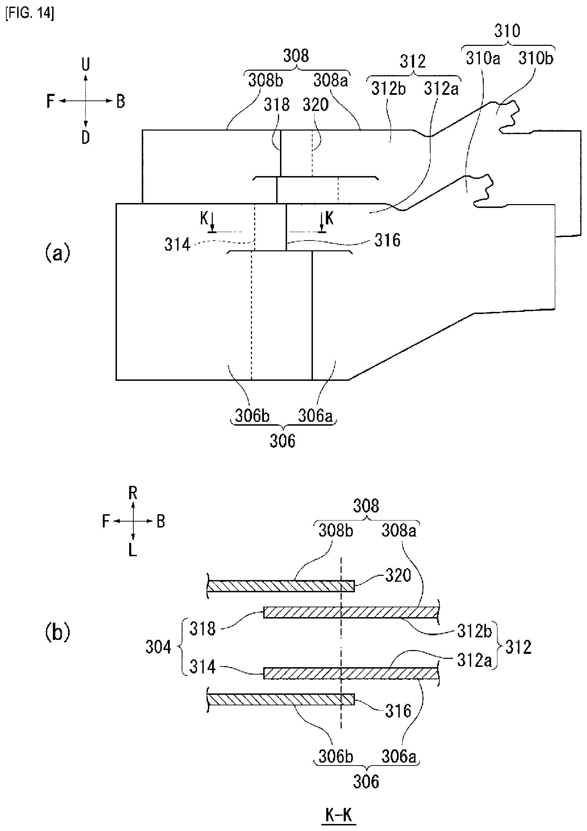

FIG. 14 is a view depicting a state in which the inner panel 306 and the outer panel 308 of FIG. 13 are overlapped. FIG. 14(a) depicts the entire inner panel 306 and the outer panel 308.

The inner panel 306 and the outer panel 308 are joined together with the edge 314 of the first inner panel 306a and the edge 318 of the first outer panel 308a facing each other. Specifically, the first inner panel 306a and the first outer panel 308a are joined and the second inner panel 306b and the second outer panel 308b are joined with the edge 314 of the first inner panel 306a and the edge 318 of the first outer panel 308a positioned on the inside of the airbag cushion 302.

FIG. 14(b) is a cross-sectional view of the inner panel 306 and the outer panel 308 taken along K-K in FIG. 14(a).

The check valve 304 is formed by the edge 314 of the first inner panel 306a and the edge 318 of the first outer panel 308a. The check valve 304 is arranged inside the duct 312 such that the edge 314 of the first inner panel 306a and the edge 318 of the first outer panel 308a protrude downstream. This check valve 304 enables the duct 312 to prevent the backflow of gas from the downstream side.

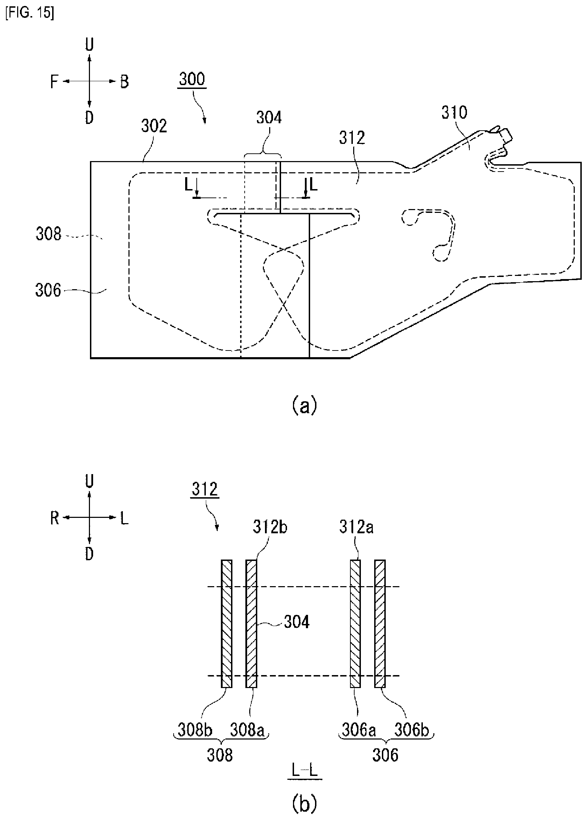

FIG. 15 is a view depicting an airbag cushion 302 manufactured from the inner panel 306 and outer panel 308 of FIG. 14(a). FIG. 15(a) is a view depicting the entire airbag cushion 302.

The airbag cushion 302 is manufactured by joining an inner panel 306 on the vehicle interior side and an outer panel 308 on the vehicle exterior side so that expandable parts are formed at various locations. At this time, the duct 312 is manufactured by a process of joining the inner panel 306 and the outer panel 308 into a tubular shape.

The duct 312 is a tubular shape portion that allows gas from the inflator 226 (see FIG. 7(b)) to flow from the upstream side to the downstream side, and is provided above the center of the airbag cushion 302 so as to extend in the front-to-back direction of the vehicle.

FIG. 15(b) is a cross-sectional view of the duct 312 taken along L-L in FIG. 15(a).

The duct 312 is formed by the duct 312a of the inner panel 306 and the duct 312b of the outer panel 308. The duct 312 is formed into a tubular shape by joining the upper edges and lower edges of the duct 312a and the duct 312b along the longitudinal direction of the airbag cushion 302.

According to the duct 312 configured as described above, gas from the inflator 226 (see FIG. 7(b)) can be caused to flow from upstream to downstream, while the check valve 304 can prevent gas from flowing back from the downstream side, thereby achieving rapid expansion and deployment of the airbag cushion 302 and maintaining the expansion pressure.

According to the method of manufacturing of the airbag device 300 of the present embodiment, since the check valve 304 can be provided in the airbag cushion 302 with a simple configuration, an increase in cost can be prevented, and manufacture of an airbag cushion 302 in which an increase in material is suppressed and which is easy to fold and easy to stow becomes feasible. In addition, according to the present embodiment, since the internal pressure of the airbag cushion 302 can be efficiently maintained by the check valve 304, a compact inflator where output is suppressed can be adopted, and an airbag device 300 that is easy to stow and where costs are suppressed can be manufactured.

As described above, the airbag cushion 302 of the present embodiment can be implemented as a curtain airbag attached to the upper part of the side wall of the vehicle compartment, similar to the airbag cushion 224 of FIG. 8. In other words, the method of manufacturing of the airbag device 300 described above can also be applied to the airbag cushion 224 depicted in FIG. 8(a).

For example, the check valve 242 depicted in FIG. 8(a) can also be manufactured by the above method of manufacturing. Specifically, the first inner panel 306a and the first outer panel 308a in FIG. 12 correspond to the cushion rear part 224a in FIG. 8(b). The second inner panel 306b and the second outer panel 308b in FIG. 12 correspond to the cushion front part 224b in FIG. 8(b). The duct 312 in FIG. 12 corresponds to the duct 240 in FIG. 8(b). The edges 314, 318 and edges 316, 318 in FIG. 12 correspond to the upstream portion 240a and downstream portion 240b in FIG. 8(b).

By applying each of the configurations of FIG. 12 described above to the respective configurations of FIG. 8(b), the check valve 242 of FIG. 8(a) in accordance with the method of manufacturing described above can be manufactured. In particular, the above method of manufacturing enables manufacturing a check valve 242 in which the edges 314 and 318 in FIG. 12 protrude from the first chamber 234 side to the second chamber 236 side in FIG. 8(a). According to this configuration, a curtain airbag device (airbag device 200) having high occupant restraint performance and capable of maintaining internal pressure during occupant restraint can be manufactured.

The method of manufacturing of the airbag device 300 described above can also be applied to the airbag cushion 124 depicted in FIG. 4(a).

For example, the check valve 142 depicted in FIG. 4(a) can also be manufactured by the above method of manufacturing. Specifically, the first inner panel 306a and the first outer panel 308a in FIG. 12 correspond to the cushion left side part 124a in FIG. 4(b). The second inner panel 306b and the second outer panel 308b in FIG. 12 correspond to the cushion right side part 124b in FIG. 4(b). The duct 312 in FIG. 12 corresponds to the duct 140 in FIG. 4(b). The edges 314, 318 and edges 316, 318 in FIG. 12 correspond to the upstream portion 140a and downstream portion 140b in FIG. 4(b).

By applying each of the configurations of FIG. 12 described above to the respective configurations of FIG. 4(b), the check valve 142 of FIG. 4(a) in accordance with the above-described method of manufacturing can be manufactured. In particular, the above method of manufacturing enables manufacturing a check valve 142 in which the edges 314 and 318 in FIG. 12 protrude from the first chamber 134 side to the second chamber 136 side in FIG. 4(a). According to this configuration, a side airbag device (airbag device 100) having high occupant restraint performance and capable of maintaining internal pressure during occupant restraint can be manufactured.

The method of manufacturing of the airbag device 300 described above can also be applied to another airbag cushion. For example, in the case of an airbag cushion of a knee airbag device that restrains the area around the knees of an occupant or a pedestrian protection airbag device that protects pedestrians, if a duct is formed by joining a plurality of panel members, a check valve can be provided using the above method of manufacturing.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts depicted in detail in the attached drawings. Furthermore, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be applied to a method of manufacturing of a vehicle airbag device 300 for protecting an occupant in the event of a vehicle emergency, and to the vehicle airbag device.

### EXPLANATION OF CODES

100. Airbag device, 102. Seat, 104. Occupant, 106. Seat back, 108. Seat cushion, 110. Headrest, 124. Airbag cushion, 124a. Cushion left side part, 124b. Cushion right side part, 126. Inflator, 128. Inflator mounting part, 134. First chamber, 136. Second chamber, 138. Third chamber, 140. Duct, 140a. Upstream portion, 140b. Downstream portion, 142. Check valve, 142a. Upper part, 142b. Lower part, 142c. Right side portion, 142d. Left side portion, 144. Joint part, 146a, 146b. Joint part, 200. Airbag device, 202. Vehicle, 204. Front row seat, 206. Rear row seat, 208. A-pillar, 210. B-pillar, 212. C-pillar, 214. Roof side rail, 216, 218. Side window, 224. Airbag cushion, 224a. Cushion rear part, 224b. Cushion front part, 226. Inflator, 228. Inflator mounting part, 230. Tab, 232. Strap, 234. First chamber, 236. Second chamber, 238. Third chamber, 240. Duct, 240a. Upstream portion, 240b. Downstream portion, 242. Check valve, 242a. Upper part, 242b. Lower part, 242c. Right side portion, 242d. Left side portion, 244. Joint part, 246a, 246b. Joint part, 300. Airbag device, 302. Airbag cushion, 304. Check valve, 306. Inner panel, 306a. First inner panel, 306b. Second inner panel, 308. Outer panel, 308a. First outer panel, 308b. Second outer panel, 310. Inflator mounting part, 310a. Inflator mounting part, 310b. Inflator mounting part, 312. Duct, 312a. Duct, 312b. Duct, 314. Edge, 316. Edge, 318. Edge, 320. Edge,

## Claims

1. A method of manufacturing a vehicle airbag device including an airbag cushion that restrains a vehicle occupant and an inflator that supplies gas to the airbag cushion,
the airbag cushion including a tubular duct through which gas from the inflator flows from an upstream side to a downstream side, and a check valve that is provided inside the duct and prevents backflow of gas from the downstream side,
the duct in a state in which an inner panel forming one surface and an outer panel forming an opposite surface are joined in a tubular shape,
the inner panel having a first inner panel on the upstream side and a second inner panel on the downstream side which are joined,
the outer panel having a first outer panel on the upstream side and a second outer panel on the downstream side which are joined,
the check valve in a state in which an edge of the first inner panel and an edge of the first outer panel protrude toward the downstream side inside the duct,
the method of manufacturing for the vehicle airbag device, comprising:
a step of joining an edge of the second inner panel to the first inner panel in a state in which an edge of the first inner panel overlaps the second inner panel;
a step of joining an edge of the second outer panel to the first outer panel in a state in which an edge of the first outer panel overlaps the second outer panel; and
a step of joining the inner panel and the outer panel in the tubular shape in a state in which the edge of the first inner panel and the edge of the first outer panel face each other.

2. The method of manufacturing a vehicle airbag device according to claim 1,
wherein
the airbag cushion is for a side airbag attached to a seat back of the vehicle seat,
the inflator is secured to a side part of the seat and is in a state in which a portion or all of the inflator is inserted into the airbag cushion,
the airbag cushion includes a first chamber that expands and deploys forward from a first side part of the seat and a second chamber that expands and deploys forward from a second side part of the seat,
the duct extends so as to connect the first chamber and the second chamber,
and
the step of joining the inner panel and the outer panel in the tubular shape is performed in a state in which the edge of the first inner panel and the edge of the first outer panel protrude toward the second chamber side.

3. The method of manufacturing a vehicle airbag device according to claim 1,
wherein
the airbag cushion is for a curtain airbag attached to an upper part of a vehicle cabin side wall,
the inflator is secured to the upper part of the vehicle cabin side wall and is in a state in which a portion or all of the inflator is inserted into the airbag cushion,
the airbag cushion includes a first chamber that expands and deploys so as to cover a side window of the vehicle cabin side wall and a second chamber that is provided forward or rearward of the first chamber in the vehicle and expands and deploys so as to cover the side window,
the duct extends so as to connect the first chamber and the second chamber, and
the step of joining the inner panel and the outer panel in the tubular shape is performed in a state in which the edge of the first inner panel and the edge of the first outer panel protrude toward the second chamber side.

4. A vehicle airbag device, comprising:
an airbag cushion that restrains a vehicle occupant; and
an inflator that supplies gas to the airbag cushion,
wherein
the airbag cushion includes:
a first chamber that receives gas from the inflator and expands and deploys;
a duct that extends in a tubular shape from the first chamber;
a second chamber that receives gas from the first chamber via the duct and expands and deploys; and
a check valve that is provided in the duct and prevents backflow of gas from the second chamber to the first chamber,
the check valve is provided on an inner side of the duct and is in a state of extending in a tubular shape from a first chamber side toward a second chamber side, and
when an inner diameter of the duct is defined as X and a dimension of the check valve in a longitudinal direction of the duct is defined as Y, the relationship of 1 ≤ 2Y/X is satisfied.

5. The vehicle airbag device according to claim 4, wherein the duct is in a state of connecting an upstream portion that forms the first chamber side and a downstream portion that forms the second chamber side and the check valve is formed by enclosing a tip end of the upstream portion within the downstream portion.

6. The vehicle airbag device according to claim 4 or 5, wherein
the airbag cushion is for a side airbag attached to a seat back of a vehicle seat,
the inflator is secured to a side part of the seat and is in a state in which a portion or all of the inflator is inserted into the airbag cushion,
the first chamber expands and deploys forward from a first side part of the seat,
the second chamber expands and deploys forward from a second side part of the seat, and
the duct extends in a width direction of the seat so as to connect the first chamber and the second chamber.

7. The vehicle airbag device according to claim 4 or 5, wherein
the airbag cushion is for a curtain airbag attached to an upper part of a vehicle cabin side wall,
the inflator is secured to the upper part of the vehicle cabin side wall and is in a state in which a portion or all of the inflator is inserted into the airbag cushion,
the first chamber expands and deploys so as to cover a side window of the vehicle cabin side wall,
the second chamber is provided forward or rearward of the first chamber in the vehicle and expands and deploys so as to cover the side window, and
the duct extends in a front-to-back direction of the vehicle so as to connect upper parts of the first chamber and the second chamber.
